# EUROPEAN PATENT APPLICATION

(11) **EP 4 141 902 A1**
(43) Date of publication of application: **01.03.2023**
(21) Application number: 21833964.6
(22) Date of filing: 15.06.2021
(51) Int. Cl.: H01H 37/54, H02H 3/00, H02H 3/093, H02H 3/10, H02H 3/20, H02H 5/04, H02J 1/00

(54) **ELECTRIC CIRCUIT**

(30) Priority: 30.06.2020 JP 2020113222
(71) Applicant: Bourns KK, Suita-shi, Osaka 564-0034 (JP)
(72) Inventor: KUMON Takahiro, Suita-shi, Osaka 564-0034 (JP)
(74) Representative: Manitz Finsterwald Patent- und Rechtsanwaltspartnerschaft mbB
(86) International application number: PCT/JP2021/022696
(87) International publication number: WO 2022/004360

(57) **Abstract**

An electric circuit 100 includes a power line 13 to supply electric power from a power source 11 to a load 12, and a monitor line 14 electrically independent from the power line 13 to detect temperature of the heat source. The monitor line 14 has a breaker 1 connected thereon in series. The breaker 1 includes a fixed contact, a movable piece having a movable contact and pressing the movable contact so as to contact the fixed contact, and a thermally actuated element deforming with temperature changes to actuate the movable piece so that the movable contact is spaced apart from the fixed contact.

## Description

### FIELD OF THE INVENTION

The present invention relates to an electric circuit including a power source and a load.

### BACKGROUND OF THE INVENTION

Conventionally, electric circuits are known in which a breaker is connected in series with a power line (for example, see FIG. 9 of Patent Document 1).

### PRIOR ART

### Patent Document

**Patent Document 1**
Japanese Unexamined Patent Application Publication No. 2014-11018

### SUMMARY OF THE INVENTION

### Problems to be Solved by the Invention

However, in recent electric circuits, the current flowing through the power lines has increased, making it difficult for the breakers to cope with high currents.

The present invention was made in view of the above, and a primary object thereof is to provide an electronic circuit capable of enhancing the safety of high current power lines.

### Means for Solving the Problem

The present invention is an electric circuit including a power source and a load, wherein the electric circuit further includes a power line for supplying electric power from the power source to the load, and a monitor line, electrically independent from the power line, for detecting temperature of a heat source, and the monitor line is provided with a breaker connected thereon in series, the breaker being provided with a fixed contact, a movable piece having a movable contact and pressing the movable contact to contact the fixed contact, and a thermally actuated element deforming with temperature changes to actuate the movable piece so that the movable contact is spaced away from the fixed contact.

In the electric circuit of the present invention, it is preferred that the power line is provided with a current interrupting device interrupting the power line when an overcurrent flows in the power line.

In the electric circuit of the present invention, it is preferred that the current interrupting device interrupts the power line based on the operation of the breaker.

It is preferred that the electric circuit of the present invention further includes a controller controlling the current interrupting device based on a current flowing in the power line.

It is preferred that the electric circuit of the present invention further includes a controller controlling the current interrupting device based on a voltage between both ends of the power source.

It is preferred that the electric circuit of the present invention further includes a plurality of the heat sources and a plurality of the breakers, wherein each of the breakers corresponds to a respective one of the heat sources, and each of the breakers is connected in series with each other.

In the electric circuit of the present invention, it is preferred that resistance between both ends of the breaker is 1 kΩ or higher when the movable contact is spaced apart from the fixed contact.

In the electric circuit of the present invention, it is preferred that resistance between both ends of the breaker is 100 mΩ or lower when the movable contact is in contact with the fixed contact.

### Advantageous Effects of the Invention

The electric circuit of the present invention has the breaker connected to the monitor line which is electrically independent from the power line, therefore, a large current from the power line does not flow into the breaker. Thereby, the temperature of the heat source can be detected without using a high-capacity breaker corresponding to a large current, thus, the safety of the power line can be increased.

### BRIEF DESCRIPTION OF THE DRAWINGS

FIG. 1 is a circuit diagram showing an electric circuit according to an embodiment of the present invention.
FIG. 2 is a perspective view before assembly showing a schematic configuration of a breaker according to an embodiment of the present invention.
FIG. 3 is a cross-sectional view showing the breaker in normal charging or discharging state.
FIG. 4 is a cross-sectional view showing the breaker in an overcharged state or an abnormal state.
FIG. 5 is a diagram showing the operation of the electric circuit when a battery cell heats up abnormally.
FIG. 6 is a circuit diagram showing a modification of the electric circuit of FIG. 1.
FIG. 7 is a circuit diagram showing another modification of the electric circuit of FIG. 1.

### DETAILED DESCRIPTION OF THE INVENTION

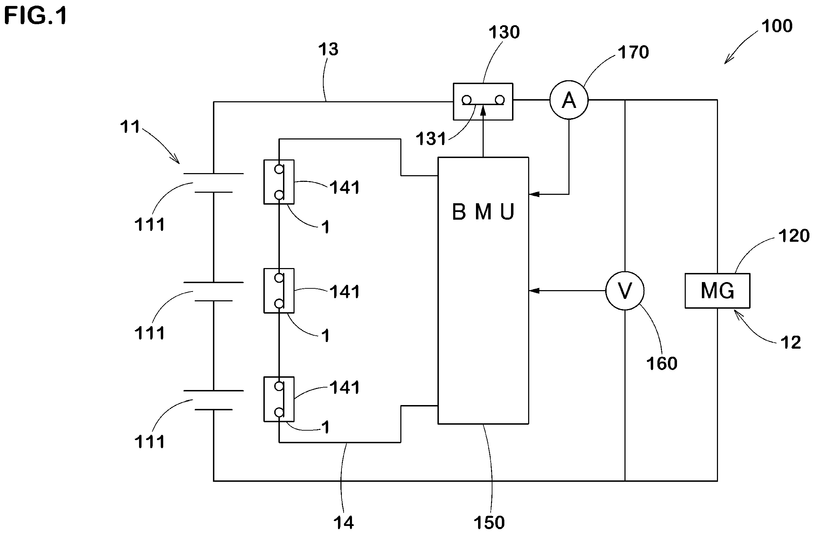

A connector according to an embodiment of the present invention will now be described in conjunction with accompanying drawings. FIG. 1 shows a schematic configuration of an electric circuit 100 of the present embodiment.

The electric circuit 100 of the present embodiment is suitable for use in electric vehicles that can be driven by a motor or in storage batteries for home use, for example. The electric circuit 100 includes a power source 11 and a load 12.

The power source 11 supplies power to the load 12. The power source 11 of the present embodiment includes a plurality of battery cells 111 for storing electric charges. Each of the battery cells 111 is connected in series. It should be noted that the battery cells 111 may be connected in parallel (or in parallel and in series). Also, the number of the battery cells 111 may be singular.

The load 12 consumes electric power supplied from the power source 11 and performs various operations. The load 12 of the present embodiment includes a motor generator 120. The motor generator 120 functions not only as a motor that generates driving force, but also as a generator that generates regenerative power. In other words, the motor generator 120, which functions as a motor, converts the electrical energy supplied by the discharging of the battery cells 111 into kinetic energy to drive the vehicle. On the other hand, the motor generator 120, which functions as a generator, generates electricity by converting the kinetic energy of the vehicle and the like into electrical energy to charge the battery cells 111.

The electric circuit 100 includes a power line 13 and a monitor line 14.

The power line 13 is a line for supplying electric power from the power source 11 to the load 12. That is, the load 12 is connected to the power source 11 via the power line 13. Generally, the power line 13 is designed to have a low resistance to accommodate the large current for driving the load 12.

The monitor line 14 is a line for detecting the temperature of heat sources. Heat sources in the electric circuit 100 include the power source 11 (in the present embodiment, the battery cells 111 to be described later) and the load 12. The monitor line 14 in FIG. 1 detects the temperature of the power source 11.

The monitor line 14 is electrically independent from the power line 13. In other words, the power line 13 and the monitor line 14 constitute different circuits. Therefore, only a small current (for example, several hundred mA) necessary to detect the temperature of the heat source flow through monitor line 14.

The monitor line 14 is provided with a current interrupting device 141 that interrupts the current according to the temperature change of the heat source. In the present electric circuit 100, a breaker 1 described below is applied as the current interrupting device 141. It is preferred that the breaker 1 is provided adjacent to the heat source so that it can sensitively follow the temperature change of the heat source. The current in the monitor line 14 fluctuates with the operation of the breaker 1. Therefore, by monitoring the current of the monitor line 14, abnormal heat generation of the heat source is detected.

A plurality of the breakers 1 can be provided according to the number of the heat sources. For example, the electric circuit 100 shown in FIG. 1 has the breakers 1 each corresponding to a respective one of the multiple battery cells. The breakers 1 are connected in series on the monitor line 14. Therefore, it is possible that the temperature of multiple heat sources is monitored with a single monitor line 14.

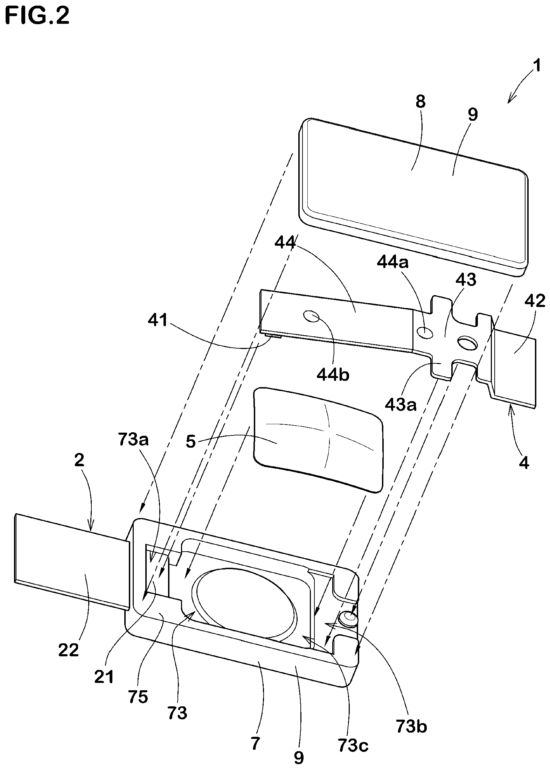

FIGs. 2 through 4 show the configuration of the breaker 1. The breaker 1 is an element that instantly cuts off the current in response to temperature rise.

The breaker 1 includes a fixed piece 2 having a fixed contact 21, a movable piece 4 having a movable contact 41 at a tip thereof, a thermally actuated element 5 that deforms with temperature change, a case 9 that houses the fixed piece 2, the movable piece 4, and the thermally actuated element 5, and the like. The case 9 is composed of a case main body (first case) 7, a lid member (second case) 8 attached to the upper surface of the case main body 7, and the like.

The fixed piece 2 has a terminal 22 exposed from the case 9. The movable piece 4 has a terminal 42 exposed from the case 9.

The fixed piece 2 is formed by pressing a plate-shaped metal material containing copper as a main component (or other metal plates such as a copper-titanium alloy, nickel silver, and brass), for example. The fixed piece 2 is embedded in the case main body 7 by insert molding with the terminal 22 exposed outside the case main body 7 and housed in the case main body 7 .

The fixed contact 21 is formed at a position facing the movable contact 41 by cladding, plating, coating, and the like of highly conductive material such as silver, nickel, nickel-silver alloy, copper-silver alloy, gold-silver alloy, and so on such that the fixed contact 21 is exposed from a part of an opening (73a) formed inside the case main body 7.

The terminal 22 is formed at one end of the fixed piece 2. The terminal 22 protrudes outward from a sidewall of an end edge of the case main body 7. The terminal 22 is electrically connected to the monitor line 14 of the electric circuit 100.

In the present application, unless otherwise specified, in the fixed piece 2, the surface on which the fixed contact 21 is formed (that is, the upper surface in FIG. 2) is called a surface A, and the opposite surface is called a surface B. If the direction from the fixed contact 21 to the movable contact 41 is defined as a first direction and the direction opposite to the first direction is defined as a second direction, then the surface A faces in the first direction, and the surface B faces in the second direction. The same applies to other parts such as the movable piece 4 and the thermally actuated element 5, for example.

The movable piece 4 is formed into an arm shape symmetrical with respect to the center line in the longitudinal direction by pressing a plate-shaped metal material mainly composed of copper or the like.

A movable contact 41 is formed at the tip of the movable piece 4 in the longitudinal direction. The movable contact 41 is made of, for example, a material equivalent to the fixed contact 21, and is joined to the tip of the movable piece 4 by welding, cladding, crimping, or the like.

The other end of the movable piece 4 in the longitudinal direction has the terminal 42 to be electrically connected to the monitor line 14 of the electric circuit 100. The terminal 42 protrudes outward from a sidewall of another end edge of the case main body 7.

The movable piece 4 has a contact portion 43 and an elastic portion 44 between the movable contact 41 and the terminal 42. The contact portion 43 is in contact with the case main body 7 and the lid member 8 between the terminal 42 and the elastic portion 44. The contact portion 43 has wing-shaped protruding portions (43a) protruding in the lateral direction of the movable piece 4. Due to the provision of the protruding portions (43a), the contact portion 43 is sandwiched between the case main body 7 and the lid member 8 over a wide area, therefore, the movable piece 4 is firmly fixed to the case 9. Further, the provision of the protruding portions (43a) is effective in positioning the movable piece 4 with respect to the case 9 and in preventing the movable piece 4 from coming off.

The elastic portion 44 extends from the contact portion 43 to the movable contact 41 side. The movable piece 4 is cantilevered by the case 9 at the contact portion 43 on a base end side of the elastic portion 44, and the elastic portion 44 is elastically deformed in that state so that the movable contact 41 formed at a tip portion of the elastic portion 44 is pressed to the fixed contact 21 side to come into contact with the fixed contact 21, therefore, the fixed piece 2 and the movable piece 4 can conduct electricity.

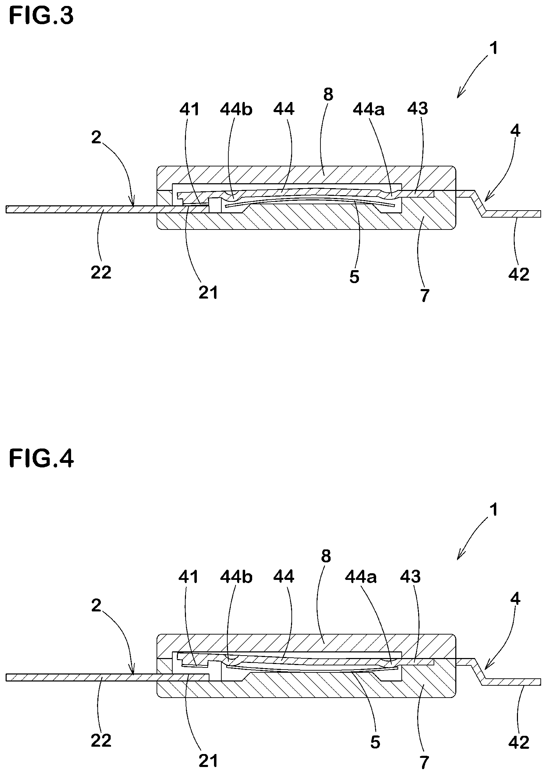

The movable piece 4 is curved or bent at the elastic portion 44 by pressing. The degree of curvature or bending is not particularly limited as long as the thermally actuated element 5 can be accommodated, and should be set appropriately considering the elastic force at the operating and reset temperatures and the pressing force of the movable contact 41. Further, a pair of protrusions (44a) and (44b) are formed on a surface B of the elastic portion 44 so as to face the thermally actuated element 5. The protrusion (44a) protrudes toward the thermally actuated element 5 at the base end side so as to be in contact with the thermally actuated element 5 in a cut-off state. The protrusion (44b) protrudes toward the thermally actuated element 5 on the tip portion side (that is, on the movable contact 41 side) of the protrusion (44a) so as to be in contact with the thermally actuated element 5 in the cut-off state. When the thermally actuated element 5 is deformed due to overheating, the thermally actuated element 5 comes into contact with the protrusions (44a) and (44b), then the deformation of the thermally actuated element 5 is transmitted to the elastic portion 44 via the protrusions (44a) and (44b), thereby, the tip portion of the movable piece 4 is pushed up (see FIG. 4).

The thermally actuated element 5 shifts the state of movable piece 4 from a conductive state in which the movable contact 41 is in contact with the fixed contact 21 to the cut-off state in which the movable contact 41 is separated and spaced apart from the fixed contact 21. The thermally actuated element 5 has an initial shape with an arc-shaped cross section, and is formed into a plate shape by laminating thin plate materials with different coefficients of thermal expansion. When the operating temperature is reached by overheating, the curved shape of the thermally actuated element 5 is reversed with a snap motion and restored when the temperature falls below the reset temperature due to cooling. The initial shape of the thermally actuated element 5 can be formed by pressing. The material and shape of the thermally actuated element 5 are not particularly limited, as long as the elastic portion 44 of the movable piece 4 is pushed up by the reverse warp operation of the thermally actuated element 5 at the desired temperature and the elastic portion 44 returns to its original state by its own elastic force. However, a rectangular shape is preferred from the point of view of productivity and efficiency of the reverse warp operation.

The material of the thermally actuated element 5 is a laminated combination of two plate-like metal materials with different thermal expansion coefficients, made of various alloys such as nickel silver, brass, stainless steel, etc., depending on the required conditions. For example, a combination of a copper-nickel-manganese alloy on the high expansion side and an iron-nickel alloy on the low expansion side is preferred as the material for the thermally actuated element 5, which provides stable operating and reset temperatures. Further, an even more preferred material in terms of chemical stability is a combination of iron-nickel-chromium alloy on the high expansion side and iron-nickel alloy on the low expansion side. Furthermore, from the point of view of chemical stability and workability, a more preferred material is a combination of an iron-nickel-chromium alloy on the high expansion side and an iron-nickel-cobalt alloy on the low expansion side.

The case main body 7 and the lid member 8, which make up the case 9, are molded from thermoplastic resins such as flame-resistant polyamide, polyphenylene sulfide (PPS) with excellent heat resistance, liquid crystal polymer (LCP), and polybutylene terephthalate (PBT). Materials other than resin may be used as long as properties equal to or better than those of the resins described above can be obtained.

The case main body 7 is formed with a recess 73 that is an internal space for accommodating the movable piece 4, the thermally actuated element 5, and the like. The recess 73 has the openings (73a) and (73b) for accommodating the movable piece 4, an opening (73c) for accommodating the movable piece 4 and the thermally actuated element 5, and the like. It should be noted that edges of the movable piece 4 and the thermally actuated element 5 incorporated in the case main body 7 are in contact with frames formed inside the recess 73, and are guided when the thermally actuated element 5 is reversely warped.

A metal plate mainly composed of copper or the like or a metal plate of stainless steel or the like may be embedded in the lid member 8 by insert molding. The metal plate contacts the surface A of the movable piece 4 as appropriate to regulate the movement of the movable piece 4, and at the same time, the metal plate contributes to the miniaturization of the breaker 1 while increasing the rigidity and strength of lid member 8 and thus the case 9 as a housing.

As shown in FIG. 2, the lid member 8 is attached to the case main body 7 such that the openings (73a), (73b), and (73c) of the case main body 7 are closed. The case main body 7 contains the fixed piece 2 (the fixed contact 21), the movable piece 4 (the movable contact 41, the elastic portion 44), the thermally actuated element 5, and the like. The case main body 7 and the lid member 8 are joined by ultrasonic welding, for example. Therefore, the breaker 1 is assembled with the terminals 22 and 42 exposed.

FIGs. 3 and 4 schematically show the operation of the breaker 1. FIG. 3 shows the operation of the breaker 1 at room temperature. Under normal charging or discharging conditions, the thermally actuated element 5 maintains its initial shape before reverse warping. The elastic portion 44 presses the movable contact 41 against the fixed contact 21 so that the movable contact 41 and the fixed contact 21 are in contact, and the movable piece 4 and the fixed piece 2 of the breaker 1 are made conductive.

As shown in FIG. 3, the thermally actuated element 5 may be spaced away from the protrusion (44a) and the protrusion (44b) of the movable piece 4 in the conductive state. Thereby, the contact pressure between the movable contact 41 and the fixed contact 21 is increased, therefore, the contact resistance between them is reduced.

FIG. 4 shows the operation of the breaker 1 under abnormally high temperature conditions. When the breaker 1 reaches a high temperature, the thermally actuated element 5, which has reached its operating temperature, warps backward and contacts the elastic portion 44 of the movable piece 4, pushing up the elastic portion 44 and separating the fixed contact 21 and the movable contact 41. At this time, the current flowing between the fixed contact 21 and the movable contact 41 is cut off.

When the high temperature condition of the breaker 1 is resolved, the thermally actuated element 5 returns to the reset temperature and restores its original initial shape. Then, the elasticity of the elastic portion 44 of the movable piece 4 brings the movable contact 41 and the fixed contact 21 into contact again, therefore, the circuit is released from the cut-off state and returns to the conductive state shown in FIG. 3.

As shown in FIG. 1, in the electric circuit 100, the breaker 1 is connected in series to the monitor line 14, which is electrically independent from the power line 13. As a result, a large current from the power line 13 is prevented from flowing into the breaker 1. Therefore, the temperature of the battery cells 111, which is the heat source, can be detected without using a high-capacity breaker corresponding to a large current, thereby, the safety of the power line 13 can be increased.

A current interrupting device 130 is provided in the power line 13. The current interrupting device 130 is provided on the positive electrode side of the power source 11 in the power line 13, but may be provided on the negative electrode (ground) side.

The current interrupting device 130 is connected in series to the power line 13 and interrupts the power line 13 when an abnormality such as overcurrent occurs in the power line 13. The current interrupting device 130 protects the battery cells 111, the motor generator 120, the power line 13, and so on from the electric circuit 100 malfunction.

A device such as a contactor 131 is used for the current interrupting device 130. The contactor 131 opens and closes a switch (contact point) by using, for example, an electromagnetic force generated by a coil or the like. When the switch in the contactor 131 opens, current in the power line 13 is interrupted. This protects battery cells 111, the motor generator 120, the power line 13, and the like from abnormalities in the electric circuit 100.

The contactor 131 of the present embodiment cuts off the power line 13 based on the operation of the breaker 1 provided on the monitor line 14. As a result, the monitor line 14 and the power line 13, which are electrically independent of each other, work together to protect the battery cells 111, the motor generator 120, the power line 13, and the like.

The electric circuit 100 of the present embodiment includes a controller 150 that controls the current interrupting device 130. More specifically, the controller 150 controls the current supplied to the coil of the contactor 131 (that is, the current for opening and closing the switch inside the contactor 131). In the present embodiment, a so-called BMU (Battery Management Unit) is used as the controller 150.

The controller 150 monitors the resistance value of the monitor line 14, which varies based on the operation of the breaker 1. The resistance value of the monitor line 14 is calculated from the voltage applied to the monitor line 14 and the current flowing through the monitor line 14. For example, by applying a constant voltage to the monitor line 14 and detecting the current flowing through the monitor line 14, the above-described resistance value is calculated. Alternatively, the resistance value may be calculated by applying a constant current to the monitor line 14 and detecting the voltage applied to the monitor line 14.

When the resistance of monitor line 14 is greater than a predetermined threshold, it is considered that one of the battery cells 111 has become overheated and the breaker 1 adjacent thereto has been activated (that is, the movable contact 41 is spaced away from the fixed contact 21). At this time, the controller 150 controls the contactor 131 to shut off the current in the power line 13.

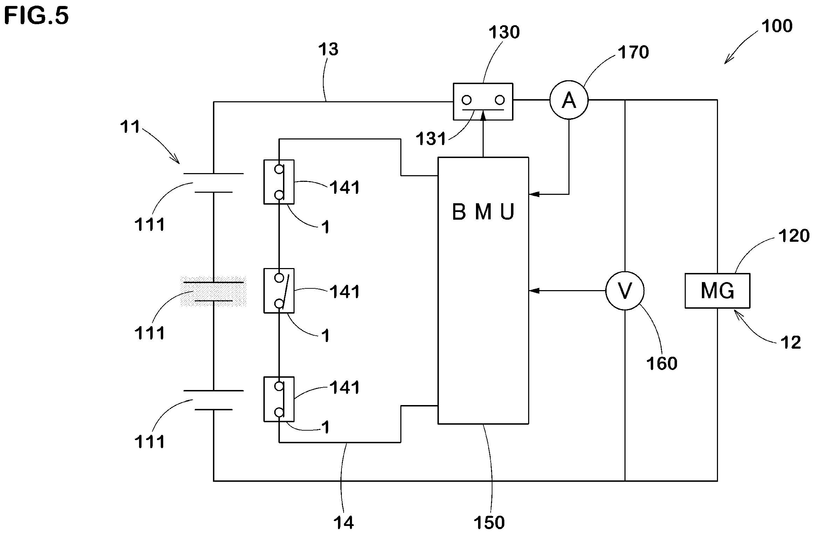

FIG. 5 shows the operation of the electric circuit 100 when, for example, the battery cell 111 positioned in the middle indicated by hatching out of the three battery cells 111 are abnormally heated. When the battery cell 111 in the center heats up abnormally, the breaker 1 adjacent thereto operates to cut off the current flowing through the monitor line 14. This increases the resistance of the monitor line 14. The controller 150 detects that the resistance value of the monitor line 14 is greater than the predetermined threshold, and sends a control signal to the contactor 131 to cut off the current in the power line 13. As a result, the heat generation of the central battery cell 111 is also converged, and the safety of the electric circuit 100 is ensured.

The controller 150 may also be configured to control the current interrupting device 130 based on the current flowing through the power line 13. The current flowing through the power line 13 is detected by a current detector 170, for example. The current detector 170 is connected in series with the current interrupting device 130 and the motor generator 120 on the power line 13.

The current detector 170 outputs an electrical signal corresponding to the detected current to the controller 150. The controller 150 controls the current interrupting device 130 to interrupt the current flowing through the power line 13 when the current detected by the current detector 170 exceeds a predetermined threshold, for example. Such a configuration further enhances the safety of the electric circuit 100.

Further, the controller 150 may also be configured to control the current interrupting device 130 based on the voltage between both ends of the power source 11. The voltage at both ends of the power source 11 is detected by a voltage detector 160. The voltage detector 160 is connected in parallel with the motor generator 120, for example.

The voltage detector 160 outputs an electrical signal corresponding to the detected voltage to the controller 150. The controller 150 controls the current interrupting device 130 to interrupt the current flowing through the power line 13 when the voltage detected by the voltage detector 160 exceeds a predetermined threshold, for example. Such a configuration further enhances the safety of the electric circuit 100.

In the electric circuit 100 shown in FIG. 1, the controller 150 monitors the current flowing through the power line 13, the voltage across the power source 11, and the temperature of the heat source (the power source 11), and controls the current interrupting device 130 to interrupt the current flowing through the power line 13 when an abnormality occurs in any of them. Thereby, the safety of the electric circuit 100 is further enhanced.

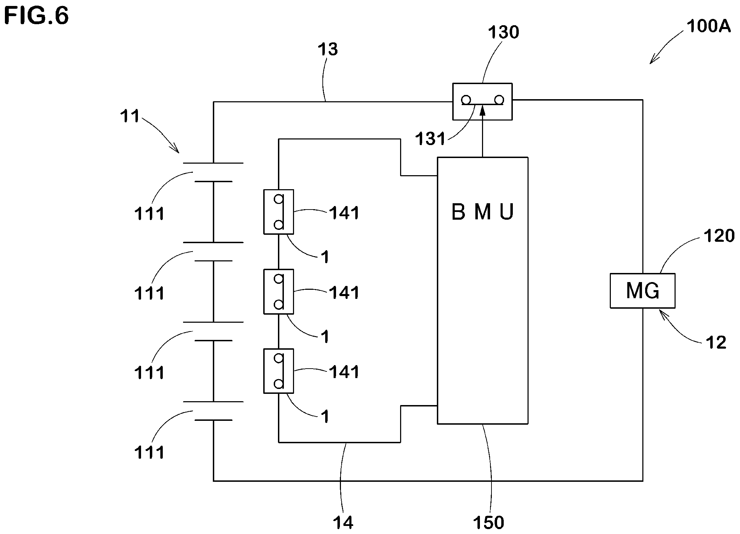

FIG. 6 shows a circuit diagram of an electric circuit 100A that is a modification of the electric circuit 100. The configuration of the electric circuit 100 described above may be employed for the portions of the electric circuit 100A that are not described below.

In the electric circuit 100A, the arrangement of the battery cells 111 and the breakers 1 has been changed. In the electric circuit 100A, each breaker 1 is arranged across between multiple battery cells 111. Therefore, the number of the breakers 1 is decreased, thereby, the manufacturing cost of the monitor line 14 is reduced. Further, the reliability of the monitor line 14 is increased since the heating of the central battery cell 111 is monitored by two breakers 1.

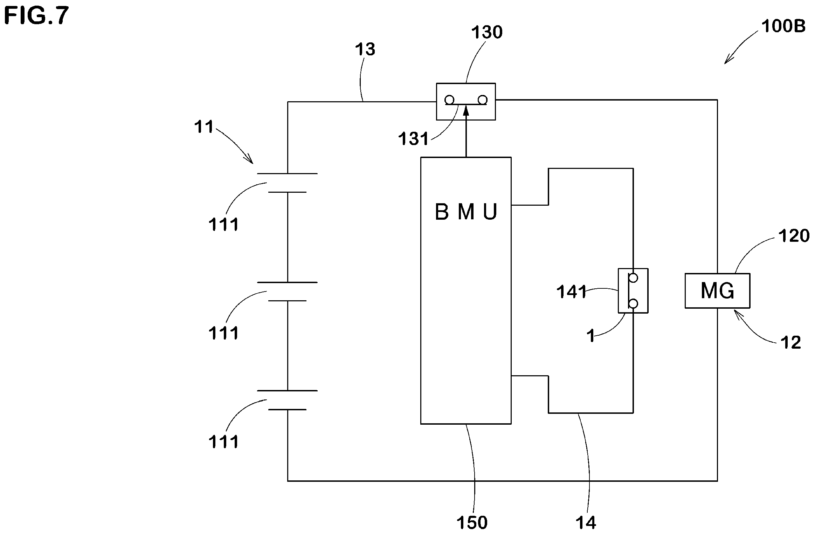

FIG. 7 is a circuit diagram of an electric circuit 100B that is another modification of the electric circuit 100. The configuration of the electric circuit 100 described above may be adopted for the portions of the electric circuit 100B that are not described below.

In the electric circuit 100B, the arrangement of the breaker 1 has been changed so that the temperature of the load 12 can be monitored as the temperature of the heat source. In the electric circuit 100B, the breaker 1 is arranged adjacent to the motor generator 120. Thereby, the safety of the electric circuit 100B is increased because the heat generated by the motor generator 120 is monitored by the breaker 1.

The electric circuit 100B can be combined with the electric circuit 100 or the electric circuit 100A as appropriate. Thereby, the temperature of the power source 11 and the load 12 can be monitored as the temperature of the heat source by the monitor line 14, and the power line 13 can be controlled.

In the electric circuit 100, and the like, the resistance between both ends of each breaker 1 (see FIG. 4) should be 1 kΩ or more at high temperature conditions in which the movable contact 41 is spaced apart from the fixed contact 21. This allows the controller 150 to more accurately detect an abnormality in the heat source temperature.

In the electric circuit 100, and the like, it is preferred that the resistance between both ends of each breaker 1 (see FIG. 3) should be 100 mΩ or less at room temperature conditions in which the movable contact 41 is in contact with the fixed contact 21. This allows more accurate detection of heat source temperature anomalies by the controller 150.

While detailed description has been made of the electric circuit 100 and the like as embodiments of the present invention, the present invention can be embodied in various forms without being limited to the illustrated embodiments. That is, the electric circuit 100 is an electric circuit including at least a power source 11 and a load 12, and it suffices as long as the electric circuit includes a power line 13 for supplying electric power from the power source 11 to the load 12, and a monitor line 14, which is electrically independent from the power line 13, for detecting temperature of a heat source, the monitor line 14 is provided with a breaker 1 connected thereon in series, and the breaker is provided with a fixed contact 21, a movable piece 4 having a movable contact 41 and pressing the movable contact 41 to contact the fixed contact 21, and a thermally actuated element 5 deforming with temperature changes to actuate the movable piece 4 so that the movable contact 41 is spaced away from the fixed contact 21.

Therefore, for example, it may be configured to limit the magnitude of the current flowing through the power line 13 when the controller 150 detects an abnormality in the heat source temperature. The electric circuit 100 and the like configured as such can be realized by applying a device that variably controls the magnitude of the current flowing through the power line 13 instead of the current interrupting device 130.

Further, the breaker 1 may be in a form in which the movable piece 4 is divided into two parts, one part forming the terminal 42 and the other part forming the elastic portion 44. In this case, for example, the part forming the terminal 42 is insert molded into the case main body 7 so that a portion thereof is exposed in the internal space of the case main body 7, and is joined to the base end portion of the elastic portion 44 by welding or the like.

### Description of the Reference Signs

- 1: breaker
- 4: movable piece
- 5: thermally actuated element
- 11: power source
- 12: load
- 13: power line
- 14: monitor line
- 21: fixed contact
- 41: movable contact
- 100: electric circuit
- 130: current interrupting device
- 141: current interrupting device
- 150: controller

## Claims

1. An electric circuit comprising a power source and a load, wherein
the electric circuit further comprises a power line for supplying electric power from the power source to the load, and a monitor line, electrically independent from the power line, for detecting temperature of a heat source, and
the monitor line is provided with a breaker connected thereon in series, the breaker being provided with a fixed contact, a movable piece having a movable contact and pressing the movable contact to contact the fixed contact, and a thermally actuated element deforming with temperature changes to actuate the movable piece so that the movable contact is spaced away from the fixed contact.

2. The electric circuit according to claim 1, wherein the power line is provided with a current interrupting device interrupting the power line when an overcurrent flows in the power line.

3. The electric circuit according to claim 2, wherein the current interrupting device interrupts the power line based on the operation of the breaker.

4. The electric circuit according to claim 2 further comprising a controller controlling the current interrupting device based on a current flowing in the power line.

5. The electric circuit according to claim 2 further comprising a controller controlling the current interrupting device based on a voltage between both ends of the power source.

6. The electric circuit according to any one of claims 1 to 5 comprising a plurality of the heat sources and a plurality of the breakers, wherein
each of the breakers corresponds to a respective one of the heat sources, and
each of the breakers is connected in series with each other.

7. The electric circuit according to any one of claims 1 to 6, wherein
resistance between both ends of the breaker is 1 kΩ or higher when the movable contact is spaced apart from the fixed contact.

8. The electric circuit according to any one of claims 1 to 7, wherein
resistance between both ends of the breaker is 100 mΩ or lower when the movable contact is in contact with the fixed contact.
